# EUROPÄISCHE PATENTSCHRIFT

(11) **EP 3 100 349 B1**
(45) Veröffentlichungstag und Bekanntmachung des Hinweises auf die Patenterteilung: **22.01.2020**
(21) Anmeldenummer: 15703728.4
(22) Anmeldetag: 29.01.2015
(51) Int. Cl.: H02P 6/182, H02P 6/18

(54) **VERFAHREN ZUM BETREIBEN EINES ELEKTROMOTORS**
METHOD FOR OPERATING AN ELECTRIC MOTOR
PROCÉDÉ POUR FAIRE FONCTIONNER UN MOTEUR ÉLECTRIQUE

(30) Priorität: 30.01.2014 DE 102014001184
(43) Veröffentlichungstag der Anmeldung: 07.12.2016
(73) Patentinhaber: Otto Bock Healthcare Products GmbH, 1070 Wien (AT)
(72) Erfinder: INSCHLAG, Josef, 8251 St. Lorenz am Wechsel (AT); EDER, Marcus, 1090 Wien (AT)
(74) Vertreter: Friedrich, Andreas
(86) Internationale Anmeldenummer: PCT/EP2015/000169
(87) Internationale Veröffentlichungsnummer: WO 2015/113766

(56) Entgegenhaltungen:
- EP-A2- 2 037 567
- WO-A1-2013/004311
- DE-A1-102004 038 415

## Beschreibung

Die Erfindung betrifft ein Verfahren zum Betreiben eines Elektromotors.

Derartige Elektromotoren sind aus dem Stand der Technik seit langem bekannt und werden auf unterschiedlichsten Gebieten und in unterschiedlichsten Größenordnungen verwendet. Elektromotoren werden beispielsweise benutzt, um Straßenbahnen oder U-Bahnen anzutreiben, aber auch zum Antrieb beispielsweise einer Kunstherzanordnung oder einer Prothese.

Das Funktionsprinzip ist dabei immer das gleiche. In einer Ausführungsform eines derartigen Elektromotors verfügt der Stator, also das sich nicht bewegende Bauteil, über wenigstens drei Segmente, die jeweils einen Elektromagneten aufweisen. Diese Elektromagnete können getrennt voneinander mit Strom beaufschlagt werden, so dass in den drei Segmenten unterschiedliche Magnetfelder unterschiedlicher Orientierung und Stärke erzeugt werden können. Der Stator ist dabei beispielsweise rund mit einer zentralen Öffnung ausgebildet. In dieser befindet sich der Rotor, der beispielsweise in Form eines Permanentmagneten vorliegt. Werden nun einige der Elektromagnetelemente mit einem elektrischen Strom beaufschlagt, wird ein Magnetfeld erzeugt, das mit dem Magnetfeld des Rotors zusammenwirkt und ein Drehmoment auf den Rotor überträgt, so dass dieser beginnt, sich zu drehen. Der Betrag und die Richtung des Drehmoments hängen dabei von den Richtungen der Magnetfeldlinien der miteinander wechselwirkenden Magnetfelder ab. Durch geschicktes Umschalten der Ströme, die durch die verschiedenen Elektromagneten des Stators fließen, lässt es sich erreichen, dass immer ein Drehmoment in nur eine Richtung auf den Rotor wirkt, so dass der Rotor des Elektromotors in Bewegung gehalten wird. Natürlich ist es auch möglich, den Rotor außerhalb des Stators anzuordnen oder den Rotor mit Elektromagneten zu versehen. Es ist auch möglich, Rotor und Stator in Form von Elektromagneten auszubilden.

Um einen derartigen Elektromotor in möglichst optimaler Weise betreiben zu können, muss gewährleistet werden, dass das durch die Wechselwirkung der unterschiedlichen Magnetfelder miteinander auf den Rotor aufgebrachte Drehmoment möglichst maximal ausgebildet ist. Um dies gewährleisten zu können, ist es nötig, die Position des Rotors relativ zum Stator zu kennen, um möglichst optimal die Winkelbeziehungen zwischen den wechselwirkenden Magnetfeldern zu kennen und ausnutzen zu können.

Aus der DE 196 45 998 A1 ist daher beispielsweise eine Kunstherzanordnung mit einem Elektromotor bekannt, bei dem im Stillstand des Elektromotors die Lage des Rotors relativ zum Stator ermittelt werden kann. Dazu werden die unterschiedlichen Segmente und die darin befindlichen Elektromagnetelemente mit elektrischem Strom beaufschlagt und anschließend die Induktivitäten gemessen. Daraus lassen sich Rückschlüsse über die Orientierung des Rotors relativ zum Stator ziehen.

Wird der Elektromotor mit einer konstanten Drehgeschwindigkeit bzw. Drehzahl betrieben, sind die Kenntnis dieser Drehzahl und die einmalige Positionsbestimmung des Rotors relativ zum Stator ausreichend, um einen optimalen Betrieb des Elektromotors zu gewährleisten. Insbesondere für den Fall, dass die Rotationsgeschwindigkeit oder Drehzahl jedoch nicht konstant ist, etwa weil der Elektromotor gerade angefahren wird oder die Drehzahl belastungsabhängig ist, ist ein optimaler Betrieb des Elektromotors durch eine einmalige Positionsbestimmung des Rotors relativ zum Stator nicht möglich. Für diesen Fall muss auch während des Betriebs die jeweilige Position des Rotors bestimmt werden.

Aus dem Stand der Technik sind Elektromotoren bekannt, die dies über spezielle Sensoren, beispielsweise Hallsensoren, erreichen. Nachteilig ist, dass dadurch die Anzahl der Bauteile für einen derartigen Elektromotor stark ansteigt und zudem jeder der Sensoren eine eigene Verkabelung und Stromzufuhr benötigt, so dass der Produktionsaufwand für einen derartigen Elektromotor stark ansteigt.

Aus dem Stand der Technik sind sensorlose Elektromotoren bekannt, bei denen die Lage des Rotors ohne zusätzliche Sensoren bestimmt werden kann. Dabei wird der Elektromotor so betrieben, dass immer zumindest eines der Segmente stromlos betrieben wird. Dies bedeutet, dass nur die jeweils anderen Elektromagneten stromdurchflossen sind und somit ein magnetisches Feld aufbauen können, das ein Drehmoment auf den Rotor überträgt. Das Elektromagnetelement im jeweils dritten Segment wird als Sensor bzw. Messinstrument verwendet, wobei in diesem Element gemessen wird, wie groß eine induzierte elektrische Spannung ist. Das Segment, das stromlos betrieben wird, ist dabei das Segment, indem diese induzierte elektrische Größe einen Nulldurchgang aufweist. Durch die Bestimmung dieses Nulldurchgangs lassen sich die Position und der Zeitpunkt, bei dem diese Position eingenommen wird, zumindest theoretisch feststellen. Nachteilig bei diesem Verfahren ist einerseits, dass jeweils wenigstens eines der Segmente kein Drehmoment auf den Rotor übertragen kann und dass andererseits insbesondere bei kleinen Drehzahlen die Bestimmung eines Nulldurchgangs mit erheblichen Messfehlern behaftet sein kann.

Aus der DE 10 2008 059 052 A1 und der DE 198 46 831 A1 sind Verfahren bekannt, mit denen die Rotorstellung eines Elektromotors ohne separaten Sensor bestimmbar ist.

Die DE 10 2004 038 415 A1 beschreibt eine chirurgische Maschine sowie ein Verfahren zum Steuern einer derartigen Maschine, mit der ein darin enthaltener Elektromotor mit möglichst gutem Wirkungsgrad auch bei kleinen Drehzahlen betreibbar ist. Dabei soll ein Space-Vektor-Puls-Weiten-Modulations-Verfahren verwendet werden. Aus der EP 2 037 567 A2 ist ein Verfahren zum Betreiben eines Elektromotors bekannt, bei dem Nulldurchgänge einzelner Phasen im Elektromotor detektiert werden. Die WO 2013/004 311 A1 beschreibt ein Verfahren zur elektronischen Kommutierung in Gleichstromelektromotoren. Auch hierbei werden Nulldurchgänge der Gegeninduktionsspannung über den Schnittpunkt der Einhüllenden mit der Nulllinie bestimmt. Dabei wird die Pulsweitenmodulation der Bestromung verändert, wenn der Nulldurchgang von positiven oder negativen Stromwerten der Bestromung überdeckt wird.

Der Erfindung liegt daher die Aufgabe zugrunde, ein Verfahren zum Betreiben eines Elektromotors vorzuschlagen, das im Betrieb des Elektromotors auch bei kleinen Drehzahlen verlässlich und sicher eine Bestimmung der Lage des Rotors relativ zum Stator erlaubt, ohne dass dafür zusätzliche Sensoren vorhanden sein müssten.

Die Erfindung löst die gestellte Aufgabe durch ein Verfahren zum Betreiben, bevorzugt zum Erhöhen einer Drehzahl eines Elektromotors, bei dem bei einer Drehzahl unterhalb eines vorbestimmten Grenzwertes ein erstes Verfahren und bei einer Drehzahl oberhalb des vorbestimmten Grenzwertes ein zweites Verfahren angewendet wird. Dabei handelt es sich bei dem ersten Verfahren um ein Verfahren zum Betreiben eines Elektromotors, der einen Stator und einen Rotor aufweist, wobei der Stator oder der Rotor wenigstens drei Segmente mit jeweils wenigstens einem Elektromagnetelement aufweist, wobei das Verfahren die folgenden Schritte aufweist:
a) gleichzeitiges Trennen aller Elektromagnetelemente aller Segmente von einer Stromversorgung während sich der Rotor dreht,
b) Messen einer in den Elektromagnetelementen induzierten elektrischen Größe,
c) Bestimmen einer Rotorlage des Rotors relativ zum Stator aus den gemessenen elektrischen Größen.

Das erste Verfahren wird folglich angewandt, während sich der Rotor des Elektromotors dreht. Im Folgenden wird das Verfahren für einen Elektromotor beschrieben, bei dem sich die Elektromagnetelemente der Segmente am Stator des Elektromotors befinden, wobei der Stator eine zentrale Öffnung aufweist, in der sich der Rotor dreht, der über einen Permanentmagneten verfügt. Analog lässt sich das Verfahren auf alle anderen Ausgestaltungen von Elektromotoren durchführen.

Zu einem bestimmten Zeitpunkt werden die Elektromagnetelemente aller Segmente von einer Stromversorgung getrennt, so dass das durch diesen bisher vorhandenen Strom aufgebaute Magnetfeld zusammenbricht und kein Drehmoment mehr auf den Rotor übertragen werden kann. Aufgrund der Trägheit bewegt sich der Rotor jedoch weiter, so dass in der hier beispielhaft angenommenen Ausgestaltung das Magnetfeld des Permanentmagneten des Rotors weiterhin gedreht wird. In diesem sich weiterhin bewegenden Magnetfeld befinden sich nun die stromlos geschalteten Spulen der Elektromagnetelemente in den Segmenten des Stators.

Diese Spulen befinden sich folglich in einem sich zeitlich ändernden Magnetfeld des Rotors, so dass es hier zu einer Induktion einer elektrischen Spannung kommt. Diese elektrische Größe wird im Verfahrensschritt b) gemessen. Die Größe und Richtung dieser elektrischen Größe hängen von der Orientierung der Elektromagnetelemente und insbesondere deren Spule relativ zum sich weiterhin bewegenden Magnetfeld des Rotors ab. Für den Fall, dass sich die Segmente am Rotor befinden, bewegen sich nun die von einer Stromversorgung getrennten Spulen der Elektromagnetelemente des Rotors an beispielsweise Permanentmagnetelementen des Stators vorbei. Unabhängig von der konkreten Ausgestaltung des Elektromotors kommt es folglich zu einer Bewegung eines Magnetfeldes relativ zu den von einer Stromversorgung getrennten Spulen der Elektromagnetelemente und der dadurch hervorgerufenen Induktion.

Aus den so gemessenen elektrischen Größen lässt sich folglich die Rotorlage des Rotors relativ zum Stator für einen bestimmten Zeitpunkt bestimmen.

Nachdem die elektrischen Größen gemessen wurden, werden die Elektromagnetelemente vorteilhafterweise wieder mit dem entsprechenden Strom beaufschlagt, so dass ein Drehmoment auf den Rotor übertragen und der Elektromotor weiter angetrieben werden kann.

Vorzugsweise geschieht das Messen der induzierten elektrischen Größe eine Zeitdauer t_{warten}, nach dem Trennen von der Stromversorgung, wobei t_{warten} vorzugsweise 50 µs beträgt. Dadurch wird erreicht, dass der elektrische Strom, mit dem die Elektromagnetelemente beaufschlagt waren, bevor sie von der Stromversorgung getrennt werden, tatsächlich abgeklungen ist und das Messergebnis nicht mehr verfälschen kann. Eine Zeitdauer t_{warten} von 50 µs hat sich dabei als ausreichend herausgestellt. Natürlich sind auch Zeitdauern von 60 µs, 70 µs oder 100 µs vorstellbar.

In einer vorteilhaften Ausgestaltung des Verfahrens werden die Elektromagnetelemente für eine Abschaltdauer t_{abschalt} von der Stromversorgung getrennt, die vorteilhafterweise 100 µs beträgt. Bei dieser Größe ist es möglich, die Zeitdauer t_{warten} von ca. 50 µs abzuwarten und anschließend für weitere 50 µs die Messung der elektrischen Größen vorzunehmen. Dies bedeutet, dass einerseits der elektrische Strom, mit dem die Elektromagnetelemente vor dem Trennen beaufschlagt waren, abgeklungen ist, so dass tatsächlich nur der durch die Rotation des Rotors induzierte elektrische Strom gemessen wird und gleichzeitig die Elektromagnetelemente nur so kurz nicht mehr elektrischem Strom beauftragt werden, dass dies nicht zu einer Leistungsabnahme des Elektromotors führt.

Vorzugsweise werden die Verfahrensschritte a) bis c) mehrfach zu unterschiedlichen Zeiten durchgeführt, so dass aus den zu unterschiedlichen Zeiten bestimmten Rotorlagen eine Rotationsgeschwindigkeit und/oder eine Umdrehungszahl des Rotors bestimmt werden. Zwischen zwei. Trennungen von der Stromversorgung der Elektomagnetelemente liegen dabei beispielsweise 500 µs. Dadurch kann auch auf eine schnelle Änderung der Rotationsgeschwindigkeit des Rotors reagiert werden. Da auf diese Weise zu unterschiedlichen Zeiten eine Rotorlage des Rotors relativ zum Stator bestimmt werden kann, ist es einfach möglich, hieraus eine Rotationsgeschwindigkeit und daraus eine Umdrehungszahl des Rotors zu bestimmen. Diese genaue Kenntnis der Rotationsgeschwindigkeit und/oder der Umdrehungszahl des Rotors erlaubt es auch, bei sich ändernden Umdrehungszahlen, den optimalen Zeitpunkt für die Änderung der elektrischen Ströme in den Elektromagnetelementen, beispielsweise durch Sinuskommutierung oder Blockkommutierung, zu erreichen. Dadurch wird der Wirkungsgrad des Elektromotors erhöht und somit die für eine bestimmte Aufgabe benötigte Energie reduziert.

Anders als bei Verfahren aus dem Stand der Technik ist es bei einem erfindungsgemäßen Verfahren nicht mehr nötig, einen Nulldurchgang zu bestimmen, der insbesondere bei kleinen Drehzahlen nur sehr ungenau bestimmbar ist. Vorliegend werden statt dessen elektrische Spannungen und/oder elektrische Ströme gemessen. Zudem ist es nicht nötig, die Rotorlage des Rotors aus nur einer Messung einer einzigen Größe in einem einzigen Sektor zu bestimmen. Vielmehr wird die Lage aus wenigstens drei Messgrößen, nämlich der jeweils gemessenen elektrischen Größe in jedem Segment, bestimmt. Die Drehzahlen, bei denen dieses Verfahren durchführbar ist, belaufen sich auf ca. 1000 Umdrehungen/Minute oder darunter. Auch bei größeren Drehzahlen lässt sich das Verfahren durchführen, sofern die elektrischen Größen schnell genug gemessen und die Messwerte ausgewertet werden können. Gegebenenfalls müssen die Abschaltdauer t_{abschalt} und/oder die Zeitdauer t_{warten} angepasst werden. Auch die Wiederholrate, mit der das Verfahren ausgeführt wird, kann angepasst werden. Allerdings kann es bei höheren Drehzahlen zu einer gegebenenfalls störenden Geräuschentwicklung durch das kurzfristige Ab- und Wiederanschalten der Stromversorgung für die Elektromagnetelemente kommen.

Insbesondere für den Fall, dass die Abschaltdauer t_{abschalt} deutlich größer als 100 µs gewählt wird oder für den Fall, dass die induzierten elektrischen Größen besonders schnell gemessen werden können, ist es sogar möglich, innerhalb einer einzigen Stromlosschaltung der Elektromagnetelemente die induzierten elektrischen Größen zweimal zu bestimmen und so bereits mit nur einer Stromlosschaltung nicht nur Rotorlage des Rotors relativ zum Stator, sondern auch die Rotationsgeschwindigkeit und die Umdrehungszahl des Elektromotors zu bestimmen.

Bei dem zweiten Verfahren handelt es sich erfindungsgemäß um ein Verfahren zum Betreiben eines Elektromotors, der einen Stator und einen Rotor aufweist, wobei der Stator oder der Rotor wenigstens drei Segmente mit wenigstens einem Elektromagnetelement aufweist, die mit einem elektrischen Strom beaufschlagbar sind, so dass sich ein Segmentmagnetfeld ausbildet, durch das ein Segment-Drehmoment auf den Rotor ausgeübt wird, dessen Stärke von einer Segmentlage des Rotors relativ zu dem Segment abhängt, wobei das Verfahren folgende Schritte aufweist:
A) Bestimmen eines Erwartungszeitpunktes, bei dem Segment-Drehmoment eines Nulldurchgangssegmentes, das eines der wenigstens drei Segmente ist, voraussichtlich gleich Null ist,
B) Trennen aller Elektromagnetelemente des Nulldurchgangssegmentes von der Stromversorgung für ein erstes Messzeitintervall und für eine zweites Messzeitintervall, wobei das erste Messzeitintervall vor dem Erwartungszeitpunkt und das zweite Messzeitintervall nach dem Erwartungszeitpunkt liegt,
C) Messen einer in den Elektromagnetelementen des Nulldurchgangssegments induzierten elektrischen Größe innerhalb des ersten Messzeitintervalls und innerhalb des zweiten Messzeitintervalls,
D) Bestimmen eines Ist-Zeitpunkts, zu dem das Segment-Drehmoment des Nulldurchgangssegmentes gleich Null war, aus den gemessenen elektrischen Größen.

Auch bei diesem zweiten Verfahren werden sämtliche Elektromagnetelemente aller Segmente mit einem Strom beaufschlagt, so dass sich die Segmentmagnetfelder ausbilden und ein Drehmoment auf den Rotor übertragen können. Wie bereits dargelegt, sind die Größe und die Richtung eines jeden Segment-Drehmoments von der Orientierung des Elektromagnetelementes des jeweiligen Segmentes relativ zum jeweils anderen Magnetfeld abhängig. In der hier beispielhaft beschriebenen Ausgestaltung hängt das Segment-Drehmoment folglich von der Orientierung des Rotors relativ zum Elektromagnetelement des jeweiligen Segmentes des Stators ab.

Zunächst wird bei dem hier beschriebenen Verfahren ein Erwartungszeitpunkt bestimmt, bei dem das übertragende Drehmoment für ein Nulldurchgangssegment den Wert Null einnimmt. Dies ist für jedes der Segmente zu bestimmten Zeitpunkten der Fall, so dass prinzipiell jedes der Segmente als Nulldurchgangssegment ausgewählt werden kann. Aus zuvor bestimmten Rotorlagen und Rotationsgeschwindigkeiten lässt sich ein derartiger Erwartungszeitpunkt ermitteln. Unter einem Erwartungszeitpunkt wird vorliegend auch ein Zeitintervall verstanden, innerhalb dessen der Nulldurchgang erwartet wird. Die Elektromagnetelemente des Nulldurchgangssegments werden nun für zwei Messzeitintervalle stromlos geschaltet, wobei das erste Messzeitintervall zeitlich vor dem Erwartungszeitpunkt und das zweite Messzeitintervall zeitlich nach dem Erwartungszeitpunkt liegt. Innerhalb dieser Messzeitintervalle wird nun jeweils mindestens einmal die in den nun von der Stromversorgung getrennten Elektromagnetelementen des Nulldurchgangssegmentes induzierte elektrische Größe gemessen.

Da zwischen diesen beiden Messungen der Erwartungszeitpunkt liegt, in dem das Drehmoment einen Nulldurchgang aufweist, wird erwartet, dass auch die induzierte elektrische Größe einen Vorzeichenwechsel zwischen dem ersten und dem zweiten Messzeitintervall aufweist. Die beiden Messwerte, die in den jeweiligen Messzeitintervallen aufgenommen werden, unterscheiden sich folglich ebenfalls im Vorzeichen. Aus diesen beiden Messwerten lässt sich nun ein tatsächlicher Ist-Zeitpunkt bestimmen, bei dem der Nulldurchgang tatsächlich stattgefunden hat. Da der Nulldurchgang charakteristisch für eine ganz besondere Orientierung des Rotors relativ zum Stator für dieses Segment ist, lässt sich damit sicher feststellen, zu welchem Zeitpunkt, nämlich zum Ist-Zeitpunkt, der Rotor diese besondere Orientierung zum Stator aufgewiesen hat.

Dieses Verfahren hat gegenüber dem vorherigen Verfahren den Vorteil, dass weniger Messwerte aufgenommen werden müssen, so dass es auch für größere Drehzahlen, die beispielsweise im Bereich von 2000 bis 3000 Umdrehungen/Minute liegen können, geeignet ist. Zudem wird jeweils nur das wenigstens eine Elektromagnetelement nur eines einzelnen Segmentes, nämlich des Nulldurchgangssegments, von der Stromversorgung getrennt, so dass die Elektromagnetelemente der übrigen Segmente durchgängig zur Übertragung eines Drehmomentes auf den Rotor verwendet werden können.

In einer vorteilhaften Ausgestaltung wird der Ist-Zeitpunkt durch eine lineare Interpolation der gemessenen elektrischen Größen bestimmt. Durch die Rotation des Rotors ist bekannt, dass die induzierten elektrischen Größen einem Sinusverlauf eines geeignet zu bestimmenden Winkel entsprechen. Es ist bekannt, dass der Sinus eines Winkels für betraglich kleine Winkel linear angenähert werden kann. Werden folglich die Messzeitintervalle zeitlich so nah aufeinander folgend gelegt, dass der Rotor relativ zum Stator einmal einen kleinen positiven und einmal einen kleinen negativen Winkel aufweist, lässt sich auf diese Weise erreichen, dass zwischen den beiden Messwerten, die in den verschiedenen Messzeitintervallen aufgenommen werden, eine lineare Interpolation möglich ist, um den Nulldurchgang und damit den Ist-Zeitpunkt zu bestimmen.

Vorzugsweise werden die Schritte A) bis D) mehrfach zu unterschiedlichen Zeiten durchgeführt und aus den dabei bestimmten Ist-Zeitpunkten eine Rotationsgeschwindigkeit und/oder eine Umdrehungszahl des Rotors bestimmt. Dabei ist es nicht nötig, dass das Nulldurchgangssegment für jede Durchführung der Verfahrensschritte A) bis D) das identische Segment ist. Vielmehr lässt sich dadurch, dass die räumliche Beziehung zwischen den einzelnen Segmenten bekannt ist, jedes Nulldurchgangssegment für eine Messung verwenden.

Als vorteilhaft hat sich herausgestellt, wenn aus einem Ist-Zeitpunkt und der Rotationsgeschwindigkeit und/oder der Umdrehungszahl ein weiterer Erwartungszeitpunkt errechnet wird. Auf diese Weise lässt eine Abweichung eines verwendeten Erwartungszeitpunkts von dem später errechneten tatsächlichen Ist-Zeitpunkt ausgleichen und korrigieren, so dass bei späteren Messungen der Ist-Zeitpunkt, bei dem der Nulldurchgang tatsächlich stattfindet, möglichst nah am Erwartungszeitpunkt liegt. Auf diese Weise lässt sich erreichen, dass auch eine lineare Interpolation zwischen den beiden innerhalb der beiden Messintervalle aufgenommenen Messwerten in guter Näherung möglich ist.

Vorzugsweise werden das erste Messzeitintervall und zweite Messzeitintervall derart gewählt, dass der Rotor beim Messen elektrischer Größen weniger als 15°, bevorzugt weniger als 10° von der Rotorlage zum Erwartungszeitpunkt abweicht. Dadurch wird gewährleistet, dass die dem Sinusverlauf folgenden Messwerte in dem Bereich liegen, in dem der Sinus durch eine lineare Funktion genährt werden kann. Liegen die Messzeitintervalle zeitlich weiter auseinander, hat sich der Rotor in der Zwischenzeit zwischen den beiden Messzeitintervallen um mehr als die genannten Winkel fortbewegt, so dass eine lineare Interpolation zwischen den beiden Messwerten insbesondere für den Fall, dass der Ist-Zeitpunkt nicht mit dem Erwartungszeitpunkt zusammenfällt, zu fehlerhaften Ergebnissen führen kann. In diesem Fall müssen andere Verfahren der Interpolation gewählt werden.

Die Erfindung löst die gestellte Aufgabe folglich durch ein Verfahren zum Erhöhen einer Drehzahl eines Elektromotors, bei dem die hier beschriebenen Verfahren kombiniert werden. Liegt die Drehzahl des Elektromotors unterhalb eines vorbestimmten Grenzwertes, der beispielsweise 1300 Umdrehungen/Minute, 1500 Umdrehungen/Minute oder 1700 Umdrehungen/Minute betragen kann, wird eines als der hier beschriebenen Verfahren verwendet, bei dem alle Elektromagnetelemente aller Segmente gleichzeitig von der Stromversorgung getrennt werden. Steigt hingegen die Drehzahl des Elektromotors an und überschreitet den vorbestimmten Grenzwert, wird das Verfahren zum Betreiben des Elektromotors ebenfalls geändert und an die Stelle des bisherigen Verfahrens ein Verfahren gemäß der zweiten Ausführungsform, bei der die Elektromagnetelemente nur eines der Segmente, nämlich des Nulldurchgangssegments stromlos geschaltet werden. Auf diese Weise lässt sich auch bei steigender oder schwankender Umdrehungszahl des Elektromotors immer ein optimaler Betrieb gewährleisten.

Auch bei den Verfahren, bei denen die Elektromagnetelemente nur eines Segments stromlos geschaltet werden, hat es sich als vorteilhaft herausgestellt, zwischen der Trennung von der Stromversorgung der jeweiligen Elektromagnetelemente und der Messung der induzierten elektrischen Größe eines Zeitdauer t_{warten} verstreichen zu lassen, um den zuvor vorhandenen elektrischen Strom, mit dem die jeweiligen Elektromagnetelemente beaufschlagt waren, abklingen zu lassen. Die Zeitdauern entsprechen dabei den für das erste Verfahren bereits beschriebenen Zeitdauern, da prinzipiell die gleichen Messungen durchgeführt werden müssen. Die Abschaltdauer t_{abschalt}, für die die jeweiligen Elektromagnetelemente stromlos geschaltet werden, entspricht dabei ebenfalls der bereits beschriebenen Abschaltdauer t_{abschalt}, so dass sie vorteilhafter Weise 100 µs beträgt.

Durch die hier beschriebenen Verfahren ist es folglich möglich, auf einfache und schnelle Weise die jeweilige Rotorlage relativ zum Stator des Elektromotors zu bestimmen, ohne dass hierfür zusätzliche Sensoren nötig wären. Wenn die jeweilige Position des Rotors bekannt ist, kann die für den Betrieb des Elektromotors verwendete Motorspannung in optimaler Weise an den Motor angelegt werden. Dies geschieht insbesondere vorteilhafter Weise so, dass über drei Phasen die Motorspannung an die drei Segmente angelegt wird, so dass das von den Spulen, die sich innerhalb der Elektromagnetelemente befinden, erzeugte Feld um 90° gegenüber dem Feld des Rotors voreilt, so dass ein maximales Drehmoment erzeugt wird. Die unterschiedlichen Messungen der jeweiligen Rotorlage des Rotors relativ zum Stator geschehen dabei vorteilhafter Weise in Abständen von 60°, so dass bei einer vollen Umdrehung des Rotors sechsmal das jeweilige Verfahren durchgeführt wird.

Mit Hilfe der folgenden Zeichnungen wird nachfolgend ein Ausführungsbeispiel der vorliegenden Erfindung näher erläutert. Es zeigt:
- Figur 1: - die schematische Darstellung eines Elektromotors,
- Figur 2: - die schematische Darstellung induzierter elektrischer Größen gemäß einem ersten Ausführungsbeispiel der vorliegenden Erfindung und
- Figur 3: - die schematische Darstellung induzierter elektrischer Größen gemäß einem weiteren Ausführungsbeispiel der vorliegenden Erfindung.

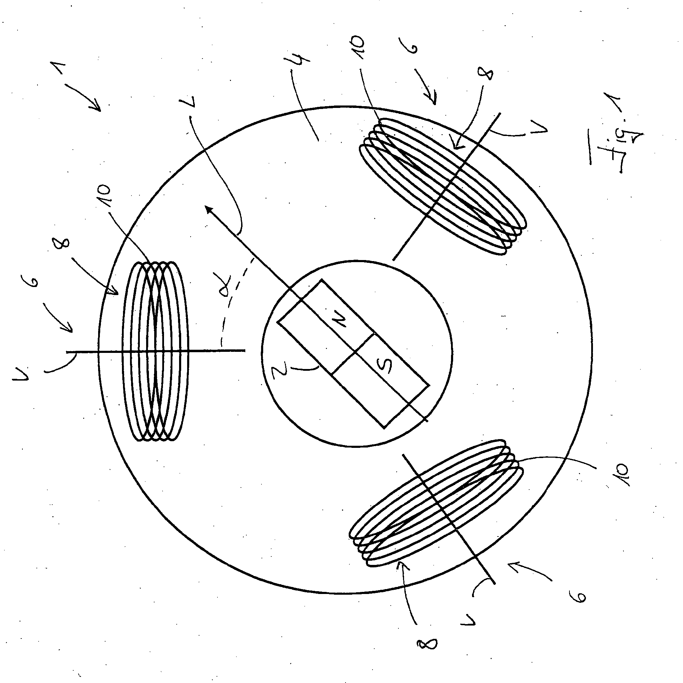

Figur 1 zeigt einen Elektromotor 1, der über einen Rotor 2 und über einen Stator 4 verfügt, der den Rotor 2 umgibt. Der Rotor 2 besteht im in Figur 1 gezeigten Ausführungsbeispiel im Wesentlichen aus einem Permanentmagneten mit Nord- und Südpol, der über eine Erstreckungsrichtung L verfügt.

Der Stator 4 ist im gezeigten Ausführungsbeispiel in drei Segmente 6 aufgeteilt, die in einem Winkel von 120° relativ zueinander angeordnet sind und über jeweils ein Elektromagnetelement 8 verfügen, das als schematisch dargestellte Spule 10 illustriert ist. Die Spulen 10 werden in aus dem Stand der Technik prinzipiell bekannter Weise von einem elektrischen Strom durchflossen, der beispielsweise sinuskommutiert angelegt wird. Die Ströme sind folglich zeitlich variabel, so dass sich das von den Spulen 10 aufgrund der Ströme aufgebaute magnetische Feld ebenfalls mit der Zeit ändert. Die einzelnen Magnetfelder der Elektromagnetelemente 8 wechselwirken mit dem Magnetfeld des Rotors 2 und übertragen so ein Drehmoment. Um hier eine optimale Ansteuerung erreichen zu können, die beispielsweise darin besteht, dass das von den Spulen 10 erzeugte magnetische Feld um 90° dem Feld des Rotors 2 voreilt, muss die Position des Rotors 2 relativ zum Stator 4 möglichst exakt bekannt sein.

Bei den Verfahren gemäß den Ausführungsbeispielen der vorliegenden Erfindung werden alle Elektromagnetelemente 8 bzw. deren Spulen 10 aller Segmente 6 von einem elektrischen Strom durchflossen, so dass in den Spulen 10 magnetische Felder aufgebaut werden.

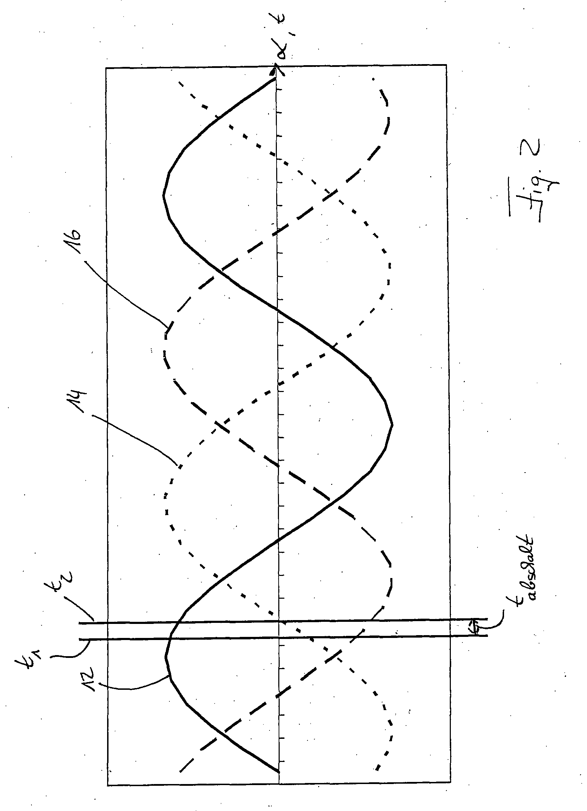

Die hier beschriebenen Verfahren haben gemeinsam, dass für eine kurze Zeitspanne eine oder mehrere der Spulen 10 von der Stromversorgung getrennt werden, so dass das durch die jeweilige Spule 10 erzeugte magnetische Feld zusammenbricht. Da dies entweder für alle Segmente 6 gleichzeitig für eine nur kurze Abschaltdauer t_{abschalt} oder für nur ein Segment 6 geschieht, wird dadurch der Rotor 2 in seiner Bewegung nicht oder nicht merklich beeinträchtigt. Der Rotor 2 dreht sich folglich weiter, so dass sich dessen magnetisches Feld mit dem Rotor 2 dreht. Die nun nicht stromdurchflossenen Spulen 10 befinden sich folglich in einem zeitlich variierenden Magnetfeld, so dass es zur Induktion einer elektrischen Größe, beispielsweise eines elektrischen Stroms oder einer elektrischen Spannung kommt. Die Größe und Richtung dieser induzierten elektrischen Größe hängt dabei vom Winkel der Erstreckungsrichtung L mit der jeweiligen Vorzugsrichtung V der jeweiligen Spulen 10 ab. Die Größe dieser induzierten elektrischen Größe ist über den Rotationswinkel beispielsweise in Figur 2 aufgetragen. Im in Figur 1 gezeigten Ausführungsbeispiel wird das oben angeordnete Segment 6 als erstes Segment bezeichnet und die einzelnen Segmente 6 anschließend im Uhrzeigersinn fortlaufend durchnummeriert. Die in Figur 1 unten rechts dargestellte Spule 10 gehört folglich zum zweiten Segment, während die in Figur 1 unten links dargestellte Spule 10 zum dritten Segment gehört.

Figur 2 zeigt schematisch die induzierte elektrische Größe, die beispielsweise der elektrische Strom oder die elektrische Spannung sein kann, als Funktion des Winkels α zwischen der Erstreckungsrichtung L und der Vorzugsrichtung V der Spule 10 des ersten Segments 6, das in Figur 1 oben dargestellt ist.

Dabei zeigt die durchgezogene Linie die erste induzierte Größe 12, die durch den rotierenden Rotor in der Spule 10 des ersten Segments, in Figur 1 also oben, induziert wird. Durch die mit kurzen Strichen gestrichelt dargestellte Linie wird die zweite induzierte Größe 14 dargestellt, die in der Spule 10 des zweiten Segments, in Figur 1 also unten rechts, induziert wird. Durch die lang gestrichelte Linie wird die dritte induzierte Größe 16 dargestellt, die in der Spule 10 des dritten Segments, in Figur 1 also unten links, induziert wird.

In Figur 2 ist entlang der X-Achse nicht nur der Winkel α aufgetragen, gleichzeitig wird die Zeit t dargestellt. Dies bedeutet, dass solange sich der Rotor 2 mit einer konstanten Winkelgeschwindigkeit dreht, und alle Spulen 10 stromlos geschaltet sind, also nicht von einem elektrischen Strom durchflossen werden, die in Figur 2 dargestellten induzierten Größen in den jeweiligen Spulen 10 induziert werden. Natürlich wird bei einem Verfahren gemäß einem Ausführungsbeispiel der vorliegenden Erfindung der Strom, der durch die Spulen 10 der Elektromagnetelemente 8 fließt, nicht für einen derart langen Zeitraum abgeschaltet. Vielmehr ist die Abschaltdauer t_{abschalt} in Figur 2 beispielhaft an einer Stelle dargestellt. Zu einem ersten Zeitpunkt t₁ werden folglich alle Spulen 10 aller Elektromagnetelemente 8 aller Segmente 6 stromlos geschaltet. Zu einem zweiten Zeitpunkt t₂ werden die Spulen 10 der Elektromagnetelemente 8 wieder mit Strom beaufschlagt. Innerhalb dieses Zeitintervalls t_{abschalt} werden nun die erste induzierte Größe 12, die zweite induzierte Größe 14 und die dritte induzierte Größe 16 bestimmt. Dadurch, dass die induzierten Größen 12, 14, 16 in allen Spulen 10 aller Segmente 6 gleichzeitig bestimmt werden können, lässt sich daraus eindeutig die Position des Rotors 2 relativ zum Stator 4 ermitteln. Wenn dies zu unterschiedlichen Zeitpunkten nacheinander geschieht, lässt sich aus der dann bekannten Zeitdauer zwischen zwei derartigen Messungen und der Veränderung der Position des Rotors 2 auf diese Weise die Rotationsgeschwindigkeit bzw. die Drehzahl des Elektromotors bestimmen.

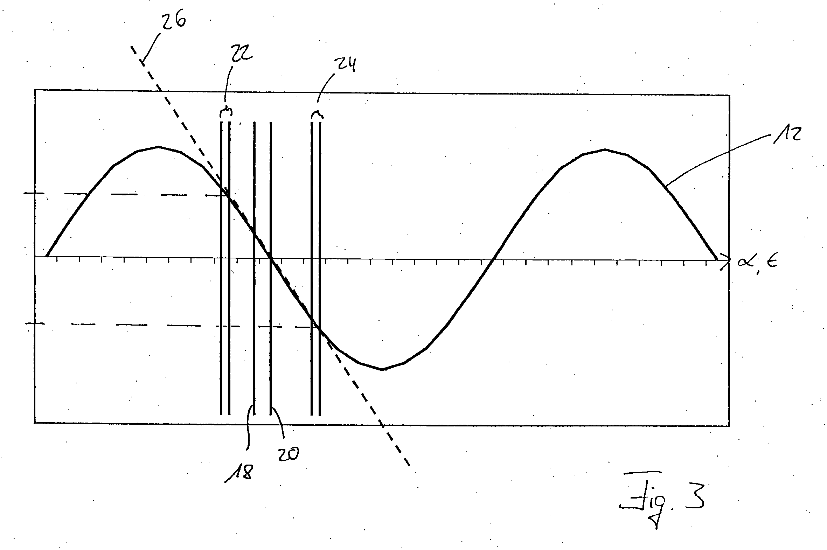

Figur 3 zeigt die Darstellung aus Figur 1, wobei nur die erste induzierte Größe 12 dargestellt ist. Anhand der Figur 3 wird nun ein Verfahren gemäß einem weiteren Ausführungsbeispiel der vorliegenden Erfindung erläutert. Zu einem Erwartungszeitpunkt 18 wird erwartet, dass ein Drehmoment eines Nulldurchgangssegments, das in diesem Fall das erste Segment 6 ist, Null ist. Dies geschieht für eine mit einem elektrischen Strom durchflossene Spule 10 des ersten Segments 6, in Figur 1 also oben, nur dann, wenn der Winkel α zwischen der Erstreckungsrichtung L und der Vorzugsrichtung V der Spule 10 des ersten Segments 6 Null oder 180° wird. Dies entspricht folglich genau dem Zustand, indem auch bei einer stromlos geschalteten Spule 10 der Wert der ersten induzierten Größe 12 Null ist. Man erkennt in Figur 3, dass der Erwartungszeitpunkt 18 leicht gegenüber einem tatsächlichen Ist-Zeitpunkt 20, verschoben ist.

In Figur 3 ist zudem ein erstes Messzeitintervall 22 und ein zweites Messzeitintervall 24 dargestellt, von denen das erste Messzeitintervall 22 vor dem Erwartungszeitpunkt 18 und das zweite Messzeitintervall 24 nach dem Erwartungszeitpunkt 18 liegt. Innerhalb dieser beiden Messzeitintervalle 22, 24 wird die Spule 10 des Elektromagnetelementes 8 des ersten Segments 6 stromlos geschaltet, so dass die induzierte elektrische Größe gemessen werden kann. Man erkennt in Figur 3 deutlich, dass die beiden Messwerte, die innerhalb des ersten Messzeitintervalls 22 und des zweiten Messzeitintervalls 24 aufgenommen werden, ein unterschiedliches Vorzeichen aufweisen.

Da ein zeitlicher Abstand zwischen dem ersten Messzeitintervall 22 und dem zweiten Messzeitintervall 24 so kurz gewählt ist, dass sich der Winkel α zwischen diesen beiden Messzeitintervallen 22, 24 nicht nur relativ geringfügig ändert, ist eine lineare Interpolation zwischen diesen beiden Messwerten möglich, um den Ist-Zeitpunkt 20 zu ermitteln. Die dafür verwendete Ausgleichgerade 26 ist als gestrichelte Linie dargestellt. Auf diese Weise ist es folglich möglich, den Ist-Zeitpunkt 20, zu dem der Winkel α zwischen der Vorzugsrichtung V der Spule 10 des ersten Segments 6 und der Erstreckungsrichtung L des Rotors 2 Null oder 180° beträgt, sehr einfach und dennoch genau möglich. Geschieht dies zu unterschiedlichen Zeitpunkten, gegebenenfalls auch für unterschiedliche Segmente 6, lässt sich daraus ebenfalls besonders einfach die Rotationsgeschwindigkeit und/oder eine Umdrehungszahl bestimmen.

### Bezugszeichenliste

- L: Erstreckungsrichtung
- t_{abschalt}: Abschaltdauer
- V: Vorzugsrichtung
- α: Winkel
- t₁: erster Zeitpunkt
- t₂: zweiter Zeitpunkt
- 1: Elektromotor
- 2: Rotor
- 4: Stator
- 6: Segment
- 8: Elektromagnetelement
- 10: Spule
- 12: erste induzierte Größe
- 14: zweite induzierte Größe
- 16: dritte induzierte Größe
- 18: Erwartungszeitpunkt
- 20: Ist-Zeitpunkt
- 22: erstes Messzeitintervall
- 24: zweites Messzeitintervall
- 26: Ausgleichsgrade

## Patentansprüche

1. Verfahren zum Betreiben eines Elektromotors (1), bei dem bei einer Drehzahl unterhalb eines vorbestimmten Grenzwertes ein erstes Verfahren und bei einer Drehzahl oberhalb des vorbestimmten Grenzwertes ein zweites Verfahren angewendet wird, wobei das erste Verfahren ein Verfahren zum Betreiben eines Elektromotors (1) ist, der einen Stator (4) und einen Rotor (2) aufweist, wobei der Stator (4) oder der Rotor (2) wenigstens drei Segmente (6) mit jeweils wenigstens einem Elektromagnetelement (8) aufweist, wobei das erste Verfahren die folgenden Schritte aufweist:
a) gleichzeitiges Trennen aller Elektromagnetelemente (8) aller Segmente (6) von einer Stromversorgung während sich der Rotor (2) dreht,
b) Messen einer in den Elektromagnetelementen (8) induzierten elektrischen Größe (12, 14, 16) für jedes Segment (6),
c) Bestimmen einer Rotorlage des Rotors (2) relativ zum Stator (4) aus den gemessenen elektrischen Größen (12, 14, 16)
und wobei das zweite Verfahren ein Verfahren zum Betreiben eines Elektromotors (1) ist, der einen Stator (4) und einen Rotor (2) aufweist, wobei der Stator (4) oder der Rotor (2) wenigstens drei Segmente (6) mit jeweils wenigstens einem Elektromagnetelement (8) aufweist, die mit einem elektrischen Strom beaufschlagbar sind, so dass sich ein Segmentmagnetfeld ausbildet, durch das ein Segment-Drehmoment auf den Rotor (2) ausgeübt wird, dessen Stärke von einer Segmentlage des Rotors (2) relativ zu dem Segment (6) abhängt, wobei das zweite Verfahren die folgenden Schritte aufweist:
A) Bestimmen eines Erwartungszeitpunktes (18), bei dem das Segment-Drehmoment eines Nulldurchgangssegments, das eines der wenigstens drei Segmente (6) ist, voraussichtlich gleich Null ist,
B) Trennen aller Elektromagnetelemente (8) des Nulldurchgangssegments von der Stormversorgung für ein erstes Messzeitintervall (22) und für ein zweites Messzeitintervall (24), wobei das erste Messzeitintervall (22) vor dem Erwartungszeitpunkt (18) und das zweite Messzeitintervall (24) nach dem Erwartungszeitpunkt (18) liegt,
C) Messen einer in den Elektromagnetelementen (8) des Nulldurchgangssegments induzierten elektrischen Größe (12, 14, 16) innerhalb des ersten Messzeitintervalls (22) und innerhalb des zweiten Messzeitintervalls (24),
D) Bestimmen eines Ist-Zeitpunkts (20), zu dem das Segment-Drehmoment des Nulldurchgangssegments gleich Null war, aus den gemessenen elektrischen Größen (12, 14, 16).

2. Verfahren nach Anspruch 1, **dadurch gekennzeichnet, dass** das Verfahren ein Verfahren zum Erhöhen einer Drehzahl des Elektromotors (1) ist.

3. Verfahren nach Anspruch 1 oder 2, **dadurch gekennzeichnet, dass** im ersten Verfahren das Messen der induzierten elektrischen Größe (12, 14, 16) eine Zeitdauer t_{warten} nach dem Trennen von der Stromversorgung geschieht, wobei die Zeitdauer t_{warten} vorzugsweise 50 µs beträgt.

4. Verfahren nach Anspruch 1, 2 oder 3, **dadurch gekennzeichnet, dass** im ersten Verfahren die Elektromagnetelemente (8) für eine Abschaltdauer t_{abschalt} von der Stromversorgung getrennt werden, die vorzugsweise 100 µs beträgt.

5. Verfahren nach einem der vorstehenden Ansprüche, **dadurch gekennzeichnet, dass** im ersten Verfahren die Schritte a) bis c) mehrfach zu unterschiedlichen Zeiten durchgeführt werden und aus den zu unterschiedlichen Zeiten bestimmten Rotorlagen eine Rotationsgeschwindigkeit und/oder eine Umdrehungszahl des Rotors (2) bestimmt wird.

6. Verfahren nach einem der vorstehenden Ansprüche, **dadurch gekennzeichnet, dass** im zweiten Verfahren der Ist-Zeitpunkt (20) durch lineare Interpolation der gemessenen elektrischen Größen (12, 14, 16) bestimmt wird.

7. Verfahren nach einem der vorstehenden Ansprüche, **dadurch gekennzeichnet, dass** im zweiten Verfahren die Schritte A) bis D) mehrfach zu unterschiedlichen Zeiten durchgeführt werden und aus den dabei bestimmten Ist-Zeitpunkten (20) eine Rotationsgeschwindigkeit und/oder eine Umdrehungszahl des Rotors (2) bestimmt wird.

8. Verfahren nach Anspruch 7, **dadurch gekennzeichnet, dass** im zweiten Verfahren aus einem Ist-Zeitpunkt (20) und der Rotationsgeschwindigkeit und/oder der Umdrehungszahl ein weiterer Erwartungszeitpunkt (18) errechnet wird.

9. Verfahren nach einem der vorstehenden Ansprüche, **dadurch gekennzeichnet, dass** im zweiten Verfahren das erste Messzeitintervall (22) und das zweite Messzeitintervall (24) derart gewählt werden, dass der Rotor (2) beim Messen der elektrischen Größen (12, 14, 16) weniger als 15°, bevorzugt weniger als 10° von der Rotorlage zum Erwartungszeitpunkt (18) abweicht.

## Claims

1. Method for operating an electric motor (1), in which a first method is applied in the case of a rate of rotation below a predetermined threshold and a second method is applied in the case of a rate of rotation above the predetermined threshold, wherein the first method is a method for operating an electric motor (1) which has a stator (4) and a rotor (2), wherein the stator (4) or the rotor (2) has at least three segments (6) which each have at least one electromagnetic element (8), wherein the first method comprises the following steps:
a) simultaneously disconnecting all electromagnetic elements (8) of all segments (6) from a power supply while the rotor (2) rotates,
b) measuring an electric variable (12, 14, 16) which is induced in the electromagnetic elements (8) for each segment (6),
c) determining a rotor position of the rotor (2) relative to the stator (4) from the measured electric variables (12, 14, 16)
and wherein the second method is a method for operating an electric motor (1) which has a stator (4) and a rotor (2), wherein the stator (4) or the rotor (2) has at least three segments (6) which each have at least one electromagnetic element (8), to which an electric current can be applied in such a manner that a segment magnetic field is formed, by means of which a segment torque is exerted on the rotor (2), the strength of which segment torque depends on a segment position of the rotor (2) relative to the segment (6), wherein the second method comprises the following steps:
A) determining an expectation time (18) at which the segment torque of a zero-crossing segment, which is one of the at least three segments (6), is expected to equal zero,
B) disconnecting all electromagnetic elements (8) of the zero-crossing segment from the power supply for a first measurement time interval (22) and for a second measurement time interval (24), wherein the first measurement time interval (22) lies prior to the expectation time (18) and the second measurement time interval (24) is after the expectation time (18),
C) measuring an electric variable (12, 14, 16) which is induced in the electromagnetic elements (8) of the zero-crossing segment within the first measurement time interval (22) and within the second measurement time interval (24),
D) determining an actual time (20), at which the segment torque of the zero-crossing segment was equal to zero, from the measured electric variables (12, 14, 16).

2. Method as claimed in claim 1, **characterized in that** the method is a method for increasing a rate of rotation of the electric motor (1).

3. Method as claimed in claim 1 or 2, **characterized in that,** in the first method, the induced electric variable (12, 14, 16) is measured following a time duration t_{wait} after disconnecting from the power supply, wherein the time duration t_{wait} is preferably 50 µs.

4. Method as claimed in claim 1, 2 or 3, **characterized in that,** in the first method, the electromagnetic elements (8) are disconnected from the power supply for a switch-off duration t_{switch-off}, which is preferably 100 µs.

5. Method as claimed in one of the preceding claims, **characterized in that,** in the first method, steps a) to c) are carried out a number of times at different times and a rotational speed and/or a number of revolutions of the rotor (2) is/are determined from the rotor positions determined at different times.

6. Method as claimed in one of the preceding claims, **characterized in that,** in the second method, the actual time (20) is determined by linear interpolation of the measured electric variables (12, 14, 16).

7. Method as claimed in one of the preceding claims, **characterized in that,** in the second method, steps A) to D) are carried out a number of times at different times and a rotational speed and/or a number of revolutions of the rotor (2) is/are determined from the actual times (20) determined in the process.

8. Method as claimed in claim 7, **characterized in that,** in the second method, a further expectation time (18) is calculated from an actual time (20) and the rotational speed and/or the number of revolutions.

9. Method as claimed in one of the preceding claims, **characterized in that,** in the second method, the first measurement time interval (22) and the second measurement time interval (24) are selected in such a way that the rotor (2) deviates by less than 15°, preferably by less than 10° from the rotor position at the expectation time (18) when measuring the electric variables (12, 14, 16).

## Revendications

1. Procédé pour faire fonctionner un moteur électrique (1), dans lequel, à une vitesse de rotation inférieure à une valeur limite prédéterminée, un premier procédé est mis en œuvre, et à une vitesse de rotation supérieure à une valeur limite prédéterminée, un second procédé est mis en œuvre, le premier procédé étant un procédé pour faire fonctionner un moteur électrique (1) comportant un stator (4) et un rotor (2), le stator (4) ou le rotor (2) comprenant au moins trois segments (6) ayant chacun au moins un élément formant électroaimant (8), le premier procédé comprenant les étapes suivantes consistant à :
a) séparer simultanément tous les éléments formant électroaimants (8) de tous les segments (6) d'une alimentation électrique pendant que le rotor (2) tourne,
b) mesurer une grandeur électrique (12, 14, 16) induite dans les éléments formant électroaimants (8) pour chaque segment (6),
c) déterminer une position du rotor (2) par rapport au stator (4) à partir des grandeurs électriques mesurées (12, 14, 16),
et le second procédé étant un procédé pour faire fonctionner un moteur électrique (1) comportant un stator (4) et un rotor (2), le stator (4) ou le rotor (2) comprenant au moins trois segments (6) ayant chacun au moins un élément formant électroaimant (8) et susceptibles d'être alimentés en un courant électrique, de sorte qu'il se forme un champ magnétique de segment par lequel un couple de rotation de segment est exercé sur le rotor (2), dont l'intensité dépend d'une position de segment du rotor (2) par rapport au segment (6), le second procédé comprenant les étapes suivantes consistant à :
A) déterminer un instant prévisionnel (18) auquel il est prévu que le couple de rotation de segment d'un segment de passage par zéro qui est l'un desdits au moins trois segments (6) soit égal à zéro,
B) séparer tous les éléments formant électroaimants (8) du segment de passage par zéro de l'alimentation électrique pendant un premier intervalle de temps de mesure (22) et pendant un second intervalle de temps de mesure (24), le premier intervalle de temps de mesure (22) se situant avant l'instant prévisionnel (18) et le second intervalle de temps de mesure (24) se situant après l'instant prévisionnel (18),
C) mesurer une grandeur électrique (12, 14, 16) induite dans les éléments formant électroaimants (8) du segment de passage par zéro à l'intérieur du premier intervalle de temps de mesure (22) et à l'intérieur du second intervalle de temps de mesure (24),
D) déterminer à partir des grandeurs électriques mesurées (12, 14, 16) un instant réel (20) auquel le couple de rotation de segment du segment de passage par zéro était égal à zéro.

2. Procédé selon la revendication 1,
**caractérisé en ce que**
le procédé est un procédé pour augmenter une vitesse de rotation du moteur électrique (1).

3. Procédé selon la revendication 1 ou 2,
**caractérisé en ce que**
dans le premier procédé, la mesure de la grandeur électrique induite (12, 14, 16) s'effectue après une durée temporelle tattente après la séparation de l'alimentation électrique, la durée temporelle tattente étant de préférence de 50 µs.

4. Procédé selon la revendication 1, 2 ou 3,
**caractérisé en ce que**
dans le premier procédé, les éléments formant électroaimants (8) sont séparés de l'alimentation électrique pendant une durée de coupure t_{coupure} qui est de préférence de 100 µs.

5. Procédé selon l'une des revendications précédentes,
**caractérisé en ce que**
dans le premier procédé, les étapes a) à c) sont effectuées plusieurs fois à différents instants, et une vitesse de rotation et/ou un nombre de tours du rotor (2) est déterminé(e) à partir des positions de rotor déterminées à différents instants.

6. Procédé selon l'une des revendications précédentes,
**caractérisé en ce que**
dans le second procédé, l'instant réel (20) est déterminé par interpolation linéaire des grandeurs électriques mesurées (12, 14, 16).

7. Procédé selon l'une des revendications précédentes,
**caractérisé en ce que**
dans le second procédé, les étapes A) à D) sont effectuées plusieurs fois à différents instants, et une vitesse de rotation et/ou un nombre de tours du rotor (2) est déterminé(e) à partir des instants réels (20) qui y sont déterminés.

8. Procédé selon la revendication 7,
**caractérisé en ce que**
dans le second procédé, un autre instant prévisionnel (18) est calculé à partir de l'instant réel (20) et de la vitesse de rotation et/ou du nombre de tours.

9. Procédé selon l'une des revendications précédentes,
**caractérisé en ce que**
dans le second procédé, le premier intervalle de temps de mesure (22) et le second intervalle de temps de mesure (24) sont choisis de telle sorte que lors de la mesure des grandeurs électriques (12, 14, 16), le rotor (2) s'écarte moins de 15°, de préférence moins de 10° de la position de rotor à l'instant prévisionnel (18).
